# EUROPEAN PATENT APPLICATION

(11) **EP 4 675 885 A2**
(43) Date of publication of application: **07.01.2026**
(21) Application number: 25186409.6
(22) Date of filing: 30.06.2025
(51) Int. Cl.: H02J 7/00

(54) **CHARGING DEVICE, CHARGING METHOD, AND ELECTRONIC DEVICE**

(30) Priority: 01.07.2024 CN 202410873867
(71) Applicant: XIAMEN AMPACE TECHNOLOGY LIMITED, Xiamen City, Fujian Province 361000 (CN)
(72) Inventor: SU, Songyang, Xiamen City, Fujian Province, China, 361000 (CN)
(74) Representative: Icosa

(57) **Abstract**

A charging device includes: a communication unit; and a processor, configured to obtain charge-and-discharge data of a battery through the communication unit, where the charge-and-discharge data includes: the number of cycles of the battery and/or a cycling time of the battery. The processor is configured to perform the following operations: reducing a charge rate of the battery in response to a condition that the number of cycles of the battery exceeds a first threshold within a preset temperature range and/or in response to a condition that the cycling time of the battery exceeds a second threshold within a preset temperature range.

## Description

### TECHNICAL FIELD

This application relates to the technical field of batteries, and in particular, to a charging device, a charging method, and an electronic device.

### BACKGROUND

Power batteries are widely used in various consumer electronics and electric vehicles due to outstanding features such as a high energy density, reversibility, safety, and environmentally friendliness. However, the use of the power batteries in a low-temperature environment is limited to some extent. For example, the low-temperature environment causes an abrupt drastic decline in the capacity of a power battery during cycling of the battery. Therefore, how to improve the stable performance of the power batteries in a low-temperature environment poses a pressing challenge.

### SUMMARY

In view of the above situation, it is necessary to provide a charging device, a charging method, and an electronic device to improve the stable performance of a battery in a low-temperature environment and prolong the lifespan of the battery.

According to a first aspect, an embodiment of this application provides a charging device. The charging device includes a communication unit and a processor. The processor is configured to obtain charge-and-discharge data of a battery through the communication unit. The charge-and-discharge data includes: the number of cycles of the battery and/or a cycling time of the battery. The processor is configured to perform the following operations: reducing a charge rate of the battery in response to a condition that the number of cycles of the battery exceeds a first threshold within a preset temperature range and/or in response to a condition that the cycling time of the battery exceeds a second threshold within a preset temperature range. The preset temperature range is less than or equal to 10 °C. In this embodiment of this application, by reducing the charge rate of the battery, the temperature performance of the battery in a low-temperature environment is improved, and the lifespan of the battery is prolonged.

In one or some embodiments of this application in the first aspect, the reducing a charge rate of the battery includes: reducing a charge rate *C_{N}* of the battery in an N^{th} charge-and-discharge cycle based on a charge rate in an (N-1)^{th} charge-and-discharge cycle in response to a condition that a difference in the number of cycles between an M^{th} charge-and-discharge cycle and the N^{th} charge-and-discharge cycle of the battery within the preset temperature range exceeds the first threshold, where M is less than N, both M and N are positive integers, and N ≥ 2. In this or these embodiments of this application, by reducing the charge rate of the battery used in a low-temperature environment, the risk of lithium plating of the battery is reduced, the service life of the battery is effectively prolonged, and the risk of thermal runaway is reduced.

In one or some embodiments of this application in the first aspect, the processor is further configured to perform the following operations: controlling the charge rate of the battery in the N^{th} charge-and-discharge cycle to be *C_{N} = C*₀ *+ (N -* 1) × *d or C_{N} = C*₀ × *Q^{N-1}* within the preset temperature range, where *C*₀ is a factory-set charge rate of the battery, -0.002*C* ≤ *d* ≤ -0.0001*C,* 0.9 ≤ *Q* ≤ 0.9999, and N is a positive integer greater than or equal to 1. In this or these embodiments of this application, by gradually reducing the charge rate of the battery in a low-temperature environment in an arithmetic or geometric progression manner, the risk of lithium plating of the battery is reduced, the service life of the battery is effectively prolonged, and the risk of thermal runaway is reduced.

In one or some embodiments of this application in the first aspect, the charge rate of the battery in charge-and-discharge cycles after the N^{th} cycle is *C_{N}.* In this or these embodiments of this application, by also gradually reducing the charge rate of the battery in a low-temperature environment in the charge-and-discharge cycles after the N^{th} cycle, the risk of lithium plating of the battery is reduced, the service life of the battery is effectively prolonged, and the risk of thermal runaway is reduced.

In one or some embodiments of this application in the first aspect, the reducing a charge rate of the battery further includes: reducing a charge rate *C_{K}* of the battery in a K^{th} charge-and-discharge cycle based on a charge rate in a (K-1)^{th} charge-and-discharge cycle in response to a condition that a difference in the number of cycles between the N^{th} charge-and-discharge cycle and the K^{th} charge-and-discharge cycle of the battery within the preset temperature range exceeds the first threshold, where *C_{K} = C_{N} +* (*K - N -* 1) × *d or C_{K} = C_{N}* × *Q^{K-N-1}, C*₀ is a factory-set charge rate of the battery, -0.002*C* ≤ *d* ≤ *-0.0001C,* 0.9 ≤ *Q* ≤ 0.9999, K is a positive integer, and K-N ≥ 1*. C_{N}* may be obtained by using any one of the above calculation methods. In this or these embodiments of this application, by gradually reducing the charge rate of the battery in a low-temperature environment after the battery is charged and discharged for a specified number of cycles, the risk of lithium plating of the battery is reduced.

In one or some embodiments of this application in the first aspect, a value of the preset temperature is positively correlated to the first threshold.

In one or some embodiments of this application in the first aspect, the first threshold is greater than or equal to 10 and less than or equal to 100.

In one or some embodiments of this application in the first aspect, the reducing a charge rate of the battery includes: reducing a charge rate *C_{T1}* of the battery in charge-and-discharge cycles after a first cycling time in response to a condition that the first cycling time of the battery within the preset temperature range exceeds the second threshold.

In one or some embodiments of this application in the first aspect, the reducing a charge rate of the battery further includes: reducing, after the first cycling time, a charge rate *C_{T2}* of the battery in charge-and-discharge cycles after a second cycling time in response to a condition that the second cycling time of the battery within the preset temperature range exceeds the second threshold, where C_{T2} is less than C_{T1}. In this or these embodiments of this application, by gradually reducing the charge rate of the battery, not only the risk of lithium plating of the battery is reduced and the service life of the battery is prolonged, but also the impact caused by the reduction in the charge rate to the charge time is alleviated.

In one or some embodiments of this application in the first aspect, the second threshold is greater than or equal to 10 hours and less than or equal to 2 days.

In one or some embodiments of this application in the first aspect, a negative electrode material of the battery includes a silicon-based material. A silicon content of the silicon-based material is negatively correlated to the first threshold or the second threshold. In this or these embodiments of this application, by adjusting a relationship between the silicon content of the battery and the first or second threshold, the amount of lithium plating generated in a process of charging the battery at the reduced charge rate is reduced.

According to a second aspect, an embodiment of this application provides a battery charging method. The method includes: reducing a charge rate of a battery based on a preset rule when charge-and-discharge data of the battery within a preset temperature range meets a preset condition, and charging the battery at the reduced charge rate, where the preset temperature range is less than or equal to 10 °C. The charge-and-discharge data includes: the number of cycles of the battery and/or a cycling time of the battery. In this embodiment of this application, by reducing the charge rate of the battery used in a low-temperature environment, the risk of lithium plating of the battery is reduced, the service life of the battery is effectively prolonged, and the risk of thermal runaway is reduced.

In one or some embodiments of this application in the second aspect, the preset condition includes at least one of: a difference in the number of cycles between an M^{th} charge-and-discharge cycle and an N^{th} charge-and-discharge cycle of the battery within the preset temperature range exceeds a first threshold; or, the cycling time of the battery within the preset temperature range exceeds a second threshold, where the first threshold is greater than or equal to 10 and less than or equal to 100.

In one or some embodiments of this application in the second aspect, the reducing a charge rate of a battery based on a preset rule includes: reducing a charge rate *C_{N}* of the battery in the N^{th} charge-and-discharge cycle based on a charge rate in an (N-1)^{th} charge-and-discharge cycle when the difference in the number of cycles between the M^{th} charge-and-discharge cycle and the N^{th} charge-and-discharge cycle of the battery within the preset temperature range exceeds the first threshold, where M is less than N, both M and N are positive integers, and N ≥ 2. In this or these embodiments of this application, by reducing the charge rate of the battery used in a low-temperature environment, the risk of lithium plating of the battery is reduced, the service life of the battery is effectively prolonged, and the risk of thermal runaway is reduced.

In one or some embodiments of this application in the second aspect, the reducing a charge rate of a battery based on a preset rule includes: controlling the charge rate of the battery in the N^{th} charge-and-discharge cycle to be *C_{N} = C*₀ *+ (N -* 1) × *d or C_{N} = C*₀ × *Q^{N-1}* within the preset temperature range, where *C*₀ is a factory-set charge rate of the battery, -0.002*C* ≤ *d* ≤ *-0.0001C,* 0.9 ≤ *Q* ≤ 0.9999, and N is a positive integer greater than or equal to 1. In this or these embodiments of this application, by gradually reducing the charge rate of the battery in a low-temperature environment in an arithmetic or geometric progression manner, the risk of lithium plating of the battery is reduced, the service life of the battery is effectively prolonged, and the risk of thermal runaway is reduced.

In one or some embodiments of this application in the second aspect, the charge rate in charge-and-discharge cycles after the N^{th} cycle is *C_{N}.*

In one or some embodiments of this application in the second aspect, the reducing a charge rate of a battery based on a preset rule further includes: reducing a charge rate *C_{K}* of the battery in a K^{th} charge-and-discharge cycle based on a charge rate in a (K-1)^{th} charge-and-discharge cycle in response to a condition that a difference in the number of cycles between the N^{th} charge-and-discharge cycle and the K^{th} charge-and-discharge cycle of the battery within the preset temperature range exceeds the first threshold, where *C_{K} = C_{N} +* (*K - N -* 1) × *d* or *C_{K} = C_{N}* × *Q^{K-N-1} , C*₀ is a factory-set charge rate of the battery, -0.002*C* ≤ *d* ≤ *-0.0001C,* 0.9 ≤ *Q* ≤ 0.9999, K is a positive integer, and K-N ≥ 1. In this or these embodiments of this application, by gradually reducing the charge rate of the battery in a low-temperature environment after the battery is charged and discharged for a specified number of cycles, the risk of lithium plating of the battery is reduced.

In one or some embodiments of this application in the second aspect, the charge rate of the battery in charge-and-discharge cycles after the K^{th} cycle is *C_{K}.*

In one or some embodiments of this application in the second aspect, a value of the preset temperature is positively correlated to the first threshold.

In one or some embodiments of this application in the second aspect, the reducing a charge rate of a battery based on a preset rule further includes: reducing a charge rate *C_{T1}* of the battery in charge-and-discharge cycles after a first cycling time in response to a condition that the first cycling time of the battery within the preset temperature range exceeds the second threshold.

In one or some embodiments of this application in the second aspect, the reducing a charge rate of a battery based on a preset rule further includes: reducing, after the first cycling time, a charge rate *C_{T2}* of the battery in charge-and-discharge cycles after a second cycling time in response to a condition that the second cycling time of the battery within the preset temperature range exceeds the second threshold, where C_{T2} is less than C_{T1}. In this or these embodiments of this application, by gradually reducing the charge rate of the battery, not only the risk of lithium plating of the battery is reduced and the service life of the battery is prolonged, but also the impact caused by the reduction in the charge rate to the charge time is alleviated.

In one or some embodiments of this application in the second aspect, the second threshold is greater than or equal to 10 hours and less than or equal to 2 days.

According to a third aspect, an embodiment of this application provides an electronic device. The electronic device includes: a battery and a processor. The processor is configured to perform an operation of charging the battery according to the charging method described above. A silicon content in a negative electrode material of the battery is greater than or equal to 1 wt% and less than or equal to 100 wt%. In some embodiments, a silicon content in a negative electrode plate of the battery is greater than or equal to 3 wt% and less than or equal to 70 wt%.

### BRIEF DESCRIPTION OF DRAWINGS

FIG. 1 is a schematic diagram of an application scenario of a battery charging method according to an embodiment of this application;
FIG. 2 is a schematic structural diagram of an electronic device according to an embodiment of this application;
FIG. 3 is a schematic structural diagram of a charging device according to an embodiment of this application;
FIG. 4 is a schematic flowchart of a battery charging method according to an embodiment of this application;
FIG. 5 is a schematic flowchart of a battery charging method according to another embodiment of this application;
FIG. 6 is a schematic flowchart of a battery charging method according to still another embodiment of this application;
FIG. 7 is a schematic flowchart of a battery charging method according to still another embodiment of this application; and
FIG. 8 is a schematic flowchart of a battery charging method according to still another embodiment of this application.

List of reference signs:
charging system 10
electronic device 100
charging device 200
battery 110
battery management system 120
memory 130, 220
processor 140, 230
communication unit 210, 150

This application is further described below with reference to the following specific embodiments and the foregoing drawings.

### DETAILED DESCRIPTION

The implementations of this application are further described in detail below with reference to the accompanying drawings and embodiments. The following detailed embodiment description and the accompanying drawings are intended to describe the principles of this application illustratively, but not to limit the scope of this application. Therefore, this application is not limited to the described embodiments.

It is hereby noted that in the description of this application, unless otherwise specified, the term "a plurality of" means at least two, and the terms such as "first", "second", and "third" are merely used for ease of description, but are not meant to indicate or imply relative importance.

Further, it is hereby noted that in the description of this application, unless otherwise expressly specified and defined, the term "connection" is intended in a broad sense. For example, a connection may be a direct connection, or may be an indirect connection implemented through an intermediary. A person of ordinary skill in the art can understand the specific meanings of the terms in this application according to specific situations.

The related art attempts to alleviate the vulnerability to lithium plating due to insufficient kinetics of a silicon-system battery in a low-temperature environment after the battery is used in the low-temperature environment for a period of time. The lithium plating exerts a great impact on the lifespan and safety of the battery. For example, some of the precipitated lithium metal is unable to be oxidized into lithium ions during discharge, thereby resulting in capacity fading of the battery. For another example, the precipitated lithium metal may form dendrites, and the continuously growing dendrites may pierce the separator, cause an internal short circuit of the battery, and give rise to a hazard or accident. Therefore, how to improve the stable performance of power batteries in a low-temperature environment poses a pressing challenge.

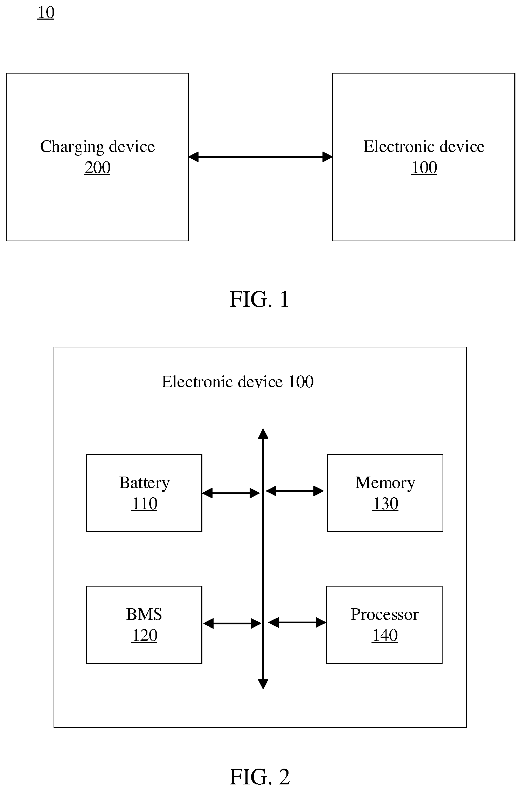

FIG. 1 is a schematic diagram of an application scenario of a battery charging method according to an embodiment of this application. As shown in FIG. 1, the battery charging method is applied in a charging system 10. The charging system 10 includes an electronic device 100 and a charging device 200. The charging device 200 is a smart charger configured to supply electrical energy to the electronic device 100. The charging device 200 in an embodiment of this application may be an ordinary charging pile, a supercharging pile, a vehicle-to-grid (V2G)-enabled charging pile, or a smart charging device or equipment capable of charging a battery. The electronic device 100 in an embodiment of this application may be an electric motorcycle, an electric bicycle, an electric vehicle, a mobile phone, a tablet computer, a personal digital assistant, a personal computer, or any other rechargeable devices as appropriate.

As shown in FIG. 2, the electronic device 100 includes at least a battery 110, a battery management system (BMS) 120, a memory 130, at least one processor 140, and a communication unit 150. The above components may be connected by a bus or connected directly.

In an embodiment of this application, the battery 110 can supply electrical energy to the electronic device 100. The battery 110 may be a silicon-system battery, including but not limited to, a lithium-ion battery, a lithium metal battery, a lithium-sulfur battery, a lithium-air battery, or the like. A silicon content in the battery 110 is greater than or equal to 1 wt% and less than or equal to 100 wt%. In an embodiment of this application, the battery 110 may be a battery cell (or briefly known as a cell), a battery module, or a battery pack. The battery module or battery pack may be formed by connecting a plurality of batteries in series and in parallel. In some embodiments, a silicon content in a negative electrode plate of the battery is greater than or equal to 3 wt% and less than or equal to 70 wt%.

In an embodiment of this application, the BMS 120 is configured to monitor status of the battery 110, intelligently manage and maintain the battery 110, prevent overcharge and overdischarge of the battery, and prolong the service life of the battery. The BMS 120 may be integrated with the battery 110 in the same device or apparatus, or the BMS 120 may be disposed outside the battery 110 as a stand-alone device/apparatus.

In an embodiment of this application, the communication unit 210 can communicate with the charging device 200 through a wireless network in addition to communicating with the charging device 200 through a communication line. The type of communication between the electronic device 100 and the charging device 200 is not particularly limited herein. FIG. 2 merely exemplifies the electronic device 100. In other embodiments, the electronic device 100 may include more or fewer components, or may include other different components.

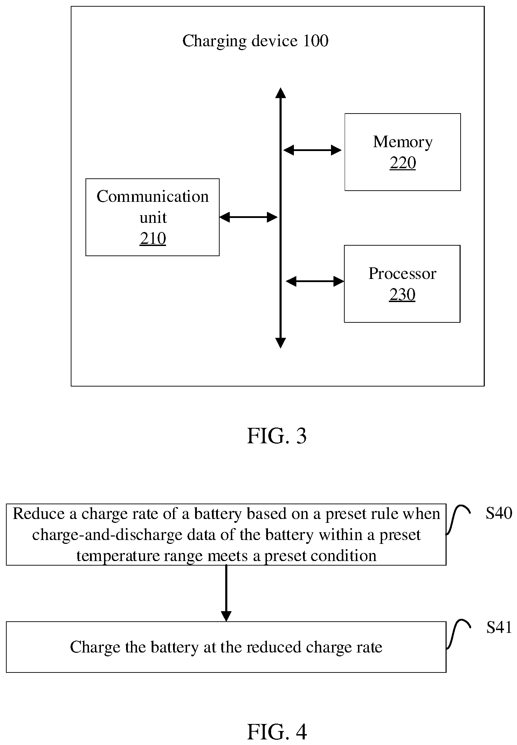

In an embodiment of this application, as shown in FIG. 3, the charging device 200 at least includes a communication unit 210, a memory 220, and a processor 230. The charging device 200 communicates with the electronic device 100 through the communication unit 210.

In an embodiment of this application, the charging device 200 may be connected to the battery 110 by a wire. The communication unit 210 in the charging device 200 is connected to the BMS 120 by a communication line. The communication line is configured to implement information exchange between the charging device 200 and the BMS 120. The communication line includes, but is not limited to, a controller area network (CAN) communication bus or a daisy chain communication bus.

In an embodiment of this application, the communication unit 210 can communicate with the BMS 120 through a wireless network in addition to communicating with the BMS 120 through a communication line. The type of communication between the charging device 200 and the BMS 120 is not particularly limited herein. FIG. 3 merely exemplifies the charging device 200 in an embodiment of this application. In other embodiments, the electric device 200 may include more or fewer components, or may differ in component configuration.

In an embodiment of this application, the charging device 200 obtains charge-and-discharge data of the battery 110 in the electronic device 100 through the communication unit 210. The charge-and-discharge data includes: the number of cycles of the battery and/or a cycling time of the battery. The charging device 200 reduces a charge rate of the battery in response to a condition that the number of cycles of the battery exceeds a first threshold within a preset temperature range and/or in response to a condition that the cycling time of the battery exceeds a second threshold within a preset temperature range, and charges the battery 110 in the electronic device 100 at the reduced current rate. The first threshold is greater than or equal to 10 and less than or equal to 100, and the preset temperature range is less than or equal to 10 °C.

In an embodiment of this application, when the charge-and-discharge cycles of a silicon-system battery go on, the cycle life of the battery fades at an increasingly fast speed. Especially, when the battery is used in a low-temperature environment, the kinetics of a battery cell of the battery in the low-temperature environment deteriorate, the protective additives in the electrolyte solution are consumed quickly, and the side reactions at an anode interface increase, thereby increasing the impedance of the battery in a later stage of the cycling. Consequently, the lithium plating window deteriorates significantly, and lithium plating occurs, resulting in a decline in the thermal stability of the battery. If the battery is used in a normaltemperature or high-temperature environment, discharging the battery in the current state brings about a large temperature rise, thereby probably posing a risk of thermal runaway of the battery. After the battery is used in the low-temperature environment and the normaltemperature environment alternately for a preset number of cycles, the battery is prone to thermal runaway at a normal temperature.

The lithium plating of the battery occurs in a charging stage of the battery. Therefore, when the charge rate of the battery in the charging stage exceeds a maximum C-rate to the extent of kinetics of the battery, the lithium ions in the battery are deposited in the form of metal lithium, thereby increasing the irreversible capacity of the battery, and deteriorating the capacity fading and safety hazards. Reducing the charge rate of the battery in the low-temperature environment can significantly improve the cycle life of the battery in the low-temperature environment.

In an embodiment of this application, the reducing, by the charging device 200, the charge rate of the battery includes: reducing a charge rate *C_{N}* of the battery in an N^{th} charge-and-discharge cycle based on a charge rate in an (N-1)^{th} charge-and-discharge cycle in response to a condition that a difference in the number of cycles between an M^{th} charge-and-discharge cycle and the N^{th} charge-and-discharge cycle of the battery within the preset temperature range exceeds the first threshold, where M is less than N, both M and N are positive integers, and N ≥ 2. The value of the preset temperature is positively correlated to the first threshold.

In an embodiment, one or more first thresholds may be set. For example, the first threshold is set to be greater than or equal to 10 and less than or equal to 100. For another example, the first threshold is set to be greater than or equal to 20 and less than or equal to 30. The charge rate of the battery does not need to be reduced in response to a condition that the difference in the number of cycles between the M^{th} charge-and-discharge cycle and the N^{th} charge-and-discharge cycle of the battery within the preset temperature range does not exceed the first threshold, and a condition that the battery does not incur obvious fading of irreversible capacity or obvious lithium plating. In response to a condition that the difference in the number of cycles between the M^{th} charge-and-discharge cycle and the N^{th} charge-and-discharge cycle of the battery within the preset temperature range exceeds the first threshold, the battery performance is sufficiently activated, and kinetics deterioration and lithium plating begin to occur to varying extent, the charging device 200 adjusts the charge rate of the battery used at different temperatures during the charge-and-discharge cycling and reduces the charge rate of the battery to reduce the risk of lithium plating of the battery, effectively prolong the service life of the battery, and reduce the risk of thermal runaway.

In an embodiment, the first threshold is set to 50. When the difference in the number of cycles between the M^{th} charge-and-discharge cycle and the N^{th} charge-and-discharge cycle of the battery within the preset temperature range exceeds 50, the charge rate of the battery may be reduced based on a rule, and the battery may be charged at the reduced charge rate. For example, the preset temperature range for the battery is 5 °C. In the M^{th} charge-and-discharge cycle of the battery, the battery is charged at a 1C rate and discharged at a 3C rate, and in charge-and-discharge cycles after the M^{th} cycle, the battery is also charged at a 1C rate and discharged at a 3C rate; in the N^{th} charge-and-discharge cycle of the battery, if the difference in the number of cycles between the M^{th} charge-and-discharge cycle and the N^{th} charge-and-discharge cycle exceeds 50 and a preset step size of charge rate adjustment is 0.1C, then in the N^{th} cycle and subsequent charge-and-discharge cycles of the battery, the battery is charged at a 0.9C rate and discharged at a 3C rate. In the (N+50)^{th} cycle and subsequent charge-and-discharge cycles of the battery, the battery is charged at a 0.8C rate and discharged at a 3C rate. In the (N+100)^{th} cycle and subsequent charge-and-discharge cycles of the battery, the battery is charged at a 0.7C rate and discharged at a 3C rate. This process goes on such that the battery is charged at a rate that is 0.1C lower than a previous charge rate after each interval of 50 charge-and-discharge cycles.

Understandably, C is a charge rate, that is, a measure of charging speed, and means a current value required for charging the battery to a rated capacity within a specified time. To be specific, charge or discharge rate = charge current/rated capacity of the battery. In another embodiment, the first threshold is set to 30. When the difference in the number of cycles between the M^{th} charge-and-discharge cycle and the N^{th} charge-and-discharge cycle of the battery within the preset temperature range exceeds 30, the charge rate of the battery may be reduced based on a rule, and the battery may be charged at the reduced charge rate. For example, the preset temperature range for the battery is 0 °C. In the M^{th} charge-and-discharge cycle of the battery, the battery is charged at a 1C rate and discharged at a 3C rate, and in charge-and-discharge cycles after the M^{th} cycle, the battery is also charged at a 1C rate and discharged at a 3C rate; in the N^{th} charge-and-discharge cycle of the battery, if the difference in the number of cycles between the M^{th} charge-and-discharge cycle and the N^{th} charge-and-discharge cycle exceeds 30 and a preset step size of charge rate adjustment is 0.1C, then in the N^{th} cycle and subsequent charge-and-discharge cycles of the battery, the battery is charged at a 0.9C rate and discharged at a 3C rate. In the (N+30)^{th} cycle and subsequent charge-and-discharge cycles of the battery, the battery is charged at a 0.8C rate and discharged at a 3C rate. In the (N+60)^{th} charge-and-discharge cycle of the battery, the battery is charged at a 0.7C rate and discharged at a 3C rate. This process goes on such that the battery is charged at a rate that is 0.1C lower than a previous charge rate after each interval of 30 charge-and-discharge cycles.

In an embodiment of this application, the reducing, by the charging device 200, the charge rate of the battery further includes: controlling, within the preset temperature range, the charge rate of the battery in the N^{th} charge-and-discharge cycle to be *C_{N} = C*₀ *+* (*N -* 1) × *d,* where *C*₀ is a factory-set charge rate of the battery, -0.002*C* ≤ *d* ≤ -0.0001*C,* and N is a positive integer greater than or equal to 1. Understandably, the value of *C*₀ may be obtained according to a product instruction manual or the release liner of the packaged battery. The release liner of the packaged battery records the factory information of the battery. The factory information includes the battery type, rated voltage, rated capacity, production date, manufacturer, charge rate *C*₀, and the like.

Specifically, the charge rate of the battery may be adjusted after each N charge-and-discharge cycle, and the charge rates of the battery may be set to comply with an arithmetic progression within the preset temperature range. Within the preset temperature range, the charge rate of the battery in the N^{th} charge-and-discharge cycle is *C_{N} = C*₀ *+ (N -* 1) *× d. C*₀ is a factory-set charge rate of the battery. -0.002*C* ≤ *d* ≤ -0.0001*C.* For example, in a circumstance that a silicon-system battery with a silicon content of 5% is used and the preset temperature range is 0 °C, during charge-and-discharge cycling of the battery, the battery is charged at a 0.7C rate and discharged at a 3C rate. After 50 charge-and-discharge cycles, the charge rate of the battery in the 51^{st} cycle and subsequent charge-and-discharge cycles is *C_{N} =* 0.7 - (51 - 1) × 0.002 = 0.6.

In an embodiment of this application, the reducing, by the charging device 200, the charge rate of the battery further includes: controlling, within the preset temperature range, the charge rate of the battery in the N^{th} charge-and-discharge cycle to be *C_{N}* = *C*₀ × *Q^{N-1},* where *C*₀ is a factory-set charge rate of the battery, 0.9 ≤ *Q* ≤ 0.9999, and N is a positive integer.

Specifically, the charge rate of the battery may be adjusted after each N charge-and-discharge cycle, and the charge rates of the battery may be set to comply with a geometric progression within the preset temperature range. Within the preset temperature range, the charge rate of the battery in the N^{th} charge-and-discharge cycle is *C_{N}* = *C*₀ × *Q^{N-1}. C*₀ is a factory-set charge rate of the battery. 0.9 ≤ *Q* ≤ 0.9999. For example, in a circumstance that a silicon-system battery with a silicon content of 15% is used and the preset temperature range is 5 °C, during charge-and-discharge cycling of the battery, the battery is charged at a 1C rate and discharged at a 4C rate. After 30 charge-and-discharge cycles, the charge rate of the battery in the 31^{st} charge-and-discharge cycle is *C_{N}* = 1*C* × 0.998³¹⁻¹ *=* 0.9417C.

It is hereby noted that in order to continuously improve the temperature performance of the battery in a low-temperature environment, the charge rate of the battery in the charge-and-discharge cycles after the N^{th} cycle is also *C_{N}.*

In an embodiment of this application, the charging device 200 may reduce the charge current of the battery successively after a specified number of charge-and-discharge cycles of the battery. Specifically, the reducing, by the charging device 200, the charge rate of the battery further includes: reducing a charge rate *C_{K}* of the battery in a K^{th} charge-and-discharge cycle based on a charge rate in a (K-1)^{th} charge-and-discharge cycle in response to a condition that the difference in the number of cycles between the N^{th} charge-and-discharge cycle and the K^{th} charge-and-discharge cycle of the battery within the preset temperature range exceeds the first threshold, where *C_{K} = C_{N} +* (*K - N -* 1) × *d or C_{K} = C_{N}* × *Q^{K-N-1}, C*₀ is a factory-set charge rate of the battery, -0.002*C* ≤ *d* ≤ *-0.0001C,* 0.9 ≤ *Q* ≤ 0.9999, K is a positive integer, and K-N ≥ 1. It is hereby noted that in order to continuously improve the temperature performance of the battery in the low-temperature environment, the charge rate of the battery in the charge-and-discharge cycles after the K^{th} cycle is also *C_{K}.*

In an embodiment of this application, the charging device 200 may reduce the charge rate of the battery within the preset temperature range based on a cycling time of the battery instead. The charging device 200 reduces the charge rate *C_{T1}* of the battery in charge-and-discharge cycles after a first cycling time in response to a condition that the first cycling time of the battery within the preset temperature range exceeds the second threshold.

In an embodiment of this application, the charging device 200 may further reduce, after the first cycling time of the battery, the charge rate *C_{T2}* of the battery in charge-and-discharge cycles after a second cycling time in response to a condition that the second cycling time of the battery within the preset temperature range exceeds the second threshold, where C_{T2} is less than C_{T1}. The second threshold is greater than or equal to 10 hours and less than or equal to 2 days. In some embodiments, the second threshold may be 20 hours.

In an embodiment of this application, the charging device 200 may further reduce, after the second cycling time, the charge rate *C_{T3}* of the battery in charge-and-discharge cycles after a third cycling time in response to a condition that the third cycling time of the battery within the preset temperature range exceeds the second threshold, where C_{T3} is less than C_{T2}. This process goes on, and the charging device 200 may reduce, after the (L-1)^{th} cycling time, the charge rate *C_{TL}* of the battery in charge-and-discharge cycles after an L^{th} cycling time in response to a condition that the L^{th} cycling time of the battery within the preset temperature range exceeds the second threshold, where C_{TL} < C_{T(L-1)}. C_{T(L-1)} is the charge rate of the battery in charge-and-discharge cycles corresponding to the (L-1)^{th} cycling time.

It is hereby noted that the second threshold corresponding to the (L-1)^{th} cycling time may be the same as or different from the second threshold corresponding to the L^{th} cycling time, and the value of the second threshold may be adjusted according to actual conditions. In an embodiment, when the charge-and-discharge cycling proceeds, the second threshold may be gradually reduced. For example, when the battery is used at a preset temperature 0 °C, the charging device 200 charges the battery at a 0.7C rate. When the first cycling time is 2 days, after the battery is cycled in the 0 °C low-temperature environment for two days, the charging device 200 reduces the charge rate of the battery to 0.65C, and charges the battery at a 0.65C rate; when the second cycling time is 1.5 days, after the battery is cycled in the 0 °C low-temperature environment for 1.5 days, the charging device 200 reduces the charge rate of the battery to 0.6C, and charges the battery at a 0.6C rate.

In an embodiment of this application, a negative electrode material of the battery includes a silicon-based material. A silicon content of the silicon-based material is negatively correlated to the first threshold. The silicon content of the silicon-based material is negatively correlated to the second threshold. For batteries with different silicon contents, when the batteries are used for the same number of cycles or the same cycling time in the same low-temperature environment, the amount of lithium plating generated by the batteries increases with the increase of the silicon content. Therefore, for batteries with different silicon contents, during the cycling within a preset temperature range, the charge rates of the batteries are reduced at different speeds or at different intervals of cycles. The higher the silicon content, the faster the charge rate needs to be reduced.

Referring to FIG. 4, FIG. 4 is a flowchart of a battery charging method according to an embodiment of this application. The battery charging method is applied to the electronic device. The battery charging method includes the following steps:
Step S40: Reduce a charge rate of a battery based on a preset rule when charge-and-discharge data of the battery within a preset temperature range meets a preset condition.

In this embodiment of this application, the charge rate of the battery is reduced based on the preset rule when the charge-and-discharge data of the battery within the preset temperature range meets the preset condition. The preset temperature range is less than or equal to 10 °C. The charge-and-discharge data includes: the number of cycles of the battery and/or the cycling time of the battery. The cycling time of the battery means the operating time of the battery. The operation of the battery includes charging and discharging of the battery. The operating time of the battery includes a charging time of the battery and a discharging time of the battery. It is hereby noted that the cycling time of the battery does not include either a static standing time or a storage time of the battery.

In an embodiment of this application, the preset condition includes at least one of: a difference in the number of cycles between an M^{th} charge-and-discharge cycle and an N^{th} charge-and-discharge cycle of the battery within the preset temperature range exceeds a first threshold; or, the cycling time of the battery within the preset temperature range exceeds a second threshold. The first threshold is greater than or equal to 10 and less than or equal to 100.

In an embodiment of this application, the reducing the charge rate of the battery based on the preset rule falls in at least one of the following circumstances:
(i) The charge rate *C_{N}* of the battery in the N^{th} charge-and-discharge cycle is reduced based on a charge rate in an (N-1)^{th} charge-and-discharge cycle when the difference in the number of cycles between the M^{th} charge-and-discharge cycle and the N^{th} charge-and-discharge cycle of the battery within the preset temperature range exceeds the first threshold, where M is less than N, both M and N are positive integers, and N ≥ 2.

Within the preset temperature range, the charge rate of the battery in the N^{th} charge-and-discharge cycle is controlled to be *C_{N} = C*₀ *+ (N -* 1) *× d,* where *C*₀ is a factory-set charge rate of the battery, -0.002*C* ≤ *d* ≤ *-0.0001C,* and N is a positive integer greater than or equal to 1.

Within the preset temperature range, the charge rate of the battery in the N^{th} charge-and-discharge cycle is controlled to be *C_{N}* = *C*₀ × *Q*^{*N*-1}*,* where *C*₀ is a factory-set charge rate of the battery, 0.9 ≤ *Q* ≤ 0.9999, and N is a positive integer.

(ii) The charge rate *C_{T1}* of the battery in charge-and-discharge cycles after a first cycling time is reduced when the first cycling time of the battery within the preset temperature range exceeds the second threshold; and the charge rate *C_{T2}* of the battery in charge-and-discharge cycles after a second cycling time is reduced when the second cycling time of the battery within the preset temperature range exceeds the second threshold, where C_{T2} is less than C_{T1}. The second threshold is greater than or equal to 10 hours and less than or equal to 2 days. In some embodiments, the second threshold may be 20 hours.

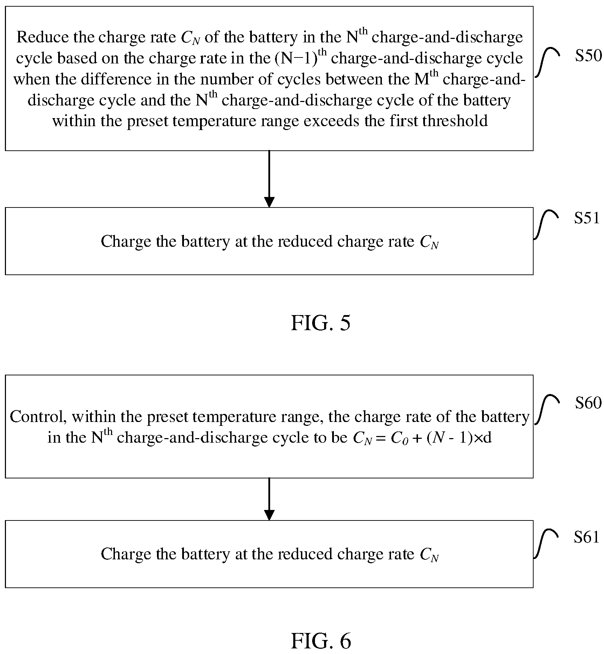

It is hereby noted that the detailed description of reducing the charge rate of the battery based on the preset rule may be learned with reference to the following description about FIG. 5 to FIG. 8, and is not provided here in detail.

Step S41: Charge the battery at the reduced charge rate.

In an embodiment of this application, after the charge rate of the battery is reduced, the battery is charged at the reduced charge rate. Specifically, the battery may be charged at the reduced charge rate according to a constant current and constant voltage charging method, or the battery may be charged in a step-by-step charging manner, and in the last step of the step-by-step charging manner, the battery is charged at the reduced charge rate. Specifically, charging the battery in a step-by-step charging manner produces a significant effect on improving the charging efficiency of the battery. In the battery charging method provided in this application, charging the battery at the reduced charge rate may be applied to the last step of the step-by-step charging manner, for example, to the constant-current charging step in the last step.

In an embodiment of this application, after the battery is charged for the N^{th} charge-and-discharge cycle at the charge rate that is reduced based on the preset rule, the charge current for the battery may be reduced successively after the battery is charged and discharged for a specified number of cycles. Specifically, the charge rate *C_{K}* of the battery in a K^{th} charge-and-discharge cycle is reduced based on a charge rate in a (K-1)^{th} charge-and-discharge cycle when a difference in the number of cycles between the N^{th} charge-and-discharge cycle and the K^{th} charge-and-discharge cycle of the battery within the preset temperature range exceeds the first threshold, where *C_{K} = C_{N} +* (*K - N -* 1) × *d or C_{K} = C_{N}* × *Q^{K-N-1}, C*₀ is a factory-set charge rate of the battery, -0.002*C* ≤ *d* ≤ *-*0.0001*C,* 0.9 ≤ *Q* ≤ 0.9999, K is a positive integer, and K-N ≥ 1.

Referring to FIG. 5, FIG. 5 is a flowchart of a battery charging method according to still another embodiment of this application. The battery charging method is applied to the electronic device. The battery charging method includes the following steps:
Step S50: Reduce the charge rate *C_{N}* of the battery in the N^{th} charge-and-discharge cycle based on a charge rate in an (N-1)^{th} charge-and-discharge cycle when the difference in the number of cycles between the M^{th} charge-and-discharge cycle and the N^{th} charge-and-discharge cycle of the battery within the preset temperature range exceeds the first threshold.

In this embodiment of this application, the preset temperature range is an ambient temperature less than or equal to 10 °C. The battery is prone to lithium plating in a low-temperature environment, thereby affecting the service life of the battery. By adjusting the charge rate of the battery used in the low-temperature environment, this application reduces the risk of lithium plating or slight lithium plating of the battery, and improves the thermal stability of the battery. Specifically, the charge rate *C_{N}* of the battery in the N^{th} charge-and-discharge cycle is reduced based on a charge rate in an (N-1)^{th} charge-and-discharge cycle when the difference in the number of cycles between the M^{th} charge-and-discharge cycle and the N^{th} charge-and-discharge cycle of the battery within the preset temperature range exceeds the first threshold, where M is less than N, both M and N are positive integers, and N ≥ 2. The value of the preset temperature is positively correlated to the first threshold.

For example, the battery is charged and discharged at different charge rates in an initial fixed charge-and-discharge mode and within a preset temperature range. Because the charging mode for battery cells in the battery is unitary, the usage status, such as the number of charge-and-discharge cycles, of the battery within the preset temperature range, can be monitored. The charge rate *C_{N}* of the battery in the N^{th} charge-and-discharge cycle is reduced based on the charge rate in the (N-1)^{th} charge-and-discharge cycle when the difference in the number of cycles between the M^{th} charge-and-discharge cycle and the N^{th} charge-and-discharge cycle of the battery within the preset temperature range exceeds the first threshold.

In an embodiment, one or more first thresholds may be set. For example, the first threshold is set to be greater than or equal to 10 and less than or equal to 100. For another example, the first threshold is set to be greater than or equal to 20 and less than or equal to 30. The charge rate of the battery does not need to be reduced when the difference in the number of cycles between the M^{th} charge-and-discharge cycle and the N^{th} charge-and-discharge cycle of the battery within the preset temperature range does not exceed the first threshold, and a condition that the battery does not incur obvious fading of irreversible capacity or obvious lithium plating. In response to a condition that the difference in the number of cycles between the M^{th} charge-and-discharge cycle and the N^{th} charge-and-discharge cycle of the battery within the preset temperature range exceeds the first threshold, the battery performance is sufficiently activated, and kinetics deterioration and lithium plating begin to occur to varying extent, this application adjusts the charge rate of the battery used at different temperatures during the charge-and-discharge cycling and reduces the charge rate of the battery to reduce the risk of lithium plating of the battery, effectively prolong the service life of the battery, and reduce the risk of thermal runaway.

In an embodiment, the first threshold is set to 50. When the difference in the number of cycles between the M^{th} charge-and-discharge cycle and the N^{th} charge-and-discharge cycle of the battery within the preset temperature range exceeds 50, the charge rate of the battery may be reduced based on a rule, and the battery may be charged at the reduced charge rate. For example, the preset temperature range for the battery is 5 °C. In the M^{th} charge-and-discharge cycle of the battery, the battery is charged at a 1C rate and discharged at a 3C rate, and in charge-and-discharge cycles after the M^{th} cycle, the battery is also charged at a 1C rate and discharged at a 3C rate; in the N^{th} charge-and-discharge cycle of the battery, if the difference in the number of cycles between the M^{th} charge-and-discharge cycle and the N^{th} charge-and-discharge cycle exceeds 50 and a preset step size of charge rate adjustment is 0.1C, then in the N^{th} cycle and subsequent charge-and-discharge cycles of the battery, the battery is charged at a 0.9C rate and discharged at a 3C rate. In the (N+50)^{th} cycle and subsequent charge-and-discharge cycles of the battery, the battery is charged at a 0.8C rate and discharged at a 3C rate. In the (N+100)^{th} cycle and subsequent charge-and-discharge cycles of the battery, the battery is charged at a 0.7C rate and discharged at a 3C rate. This process goes on such that the battery is charged at a rate that is 0.1C lower than a previous charge rate after each interval of 50 charge-and-discharge cycles.

In another embodiment, the first threshold is set to 30. When the difference in the number of cycles between the M^{th} charge-and-discharge cycle and the N^{th} charge-and-discharge cycle of the battery within the preset temperature range exceeds 30, the charge rate of the battery may be reduced based on a rule, and the battery may be charged at the reduced charge rate. For example, the preset temperature range for the battery is 0 °C. In the M^{th} charge-and-discharge cycle of the battery, the battery is charged at a 1C rate and discharged at a 3C rate, and in charge-and-discharge cycles after the M^{th} cycle, the battery is also charged at a 1C rate and discharged at a 3C rate; in the N^{th} charge-and-discharge cycle of the battery, if the difference in the number of cycles between the M^{th} charge-and-discharge cycle and the N^{th} charge-and-discharge cycle exceeds 30 and a preset step size of charge rate adjustment is 0.1C, then in the N^{th} cycle and subsequent charge-and-discharge cycles of the battery, the battery is charged at a 0.9C rate and discharged at a 3C rate. In the (N+30)^{th} cycle and subsequent charge-and-discharge cycles of the battery, the battery is charged at a 0.8C rate and discharged at a 3C rate. In the (N+60)^{th} cycle and subsequent charge-and-discharge cycles of the battery, the battery is charged at a 0.7C rate and discharged at a 3C rate. This process goes on such that the battery is charged at a rate that is 0.1C lower than a previous charge rate after each interval of 30 charge-and-discharge cycles.

It is hereby noted that in order to continuously improve the temperature performance of the battery in a low-temperature environment, the charge rate of the battery in the charge-and-discharge cycles after the N^{th} cycle is also *C_{N}.*

Step S51: Charge the battery at the reduced charge rate *C_{N}.*

For the specific implementation of step S51, reference may be made to the implementation of step S41 in FIG. 4, the details of which are not repeated here.

Referring to FIG. 6, FIG. 6 is a flowchart of a battery charging method according to still another embodiment of this application. The battery charging method is applied to the electronic device. The battery charging method includes the following steps:
Step S60: Control, within the preset temperature range, the charge rate of the battery in the N^{th} charge-and-discharge cycle to be *C_{N} = C*₀ *+ (N -* 1) × *d*, where *C*₀ is a factory-set charge rate of the battery, -0.002*C* ≤ *d* ≤ -0.0001*C,* and N is a positive integer greater than or equal to 1.

Specifically, the charge rate of the battery may be adjusted after each N charge-and-discharge cycle, and the charge rates of the battery may be set to comply with an arithmetic progression within the preset temperature range. Within the preset temperature range, the charge rate of the battery in the N^{th} charge-and-discharge cycle is *C_{N} = C*₀ *+* (*N -* 1) *× d. C*₀ is a factory-set charge rate of the battery. -0.002*C* ≤ *d* ≤ -0.0001*C.* For example, in a circumstance that a silicon-system battery with a silicon content of 5% is used and the preset temperature range is 0 °C, during charge-and-discharge cycling of the battery, the battery is charged at a 0.7C rate and discharged at a 3C rate. After 50 charge-and-discharge cycles, the charge rate of the battery in the 51^{st} charge-and-discharge cycle is *C_{N}* = 0.7 - (51 - 1) × 0.002 = 0.6.

It is hereby noted that in order to continuously improve the temperature performance of the battery in a low-temperature environment, the charge rate of the battery in the charge-and-discharge cycles after the N^{th} cycle is also *C_{N}.*

Step S61: Charge the battery at the reduced charge rate *C_{N}.*

For the specific implementation of step S1, reference may be made to the implementation of step S41 in FIG. 4, the details of which are not repeated here.

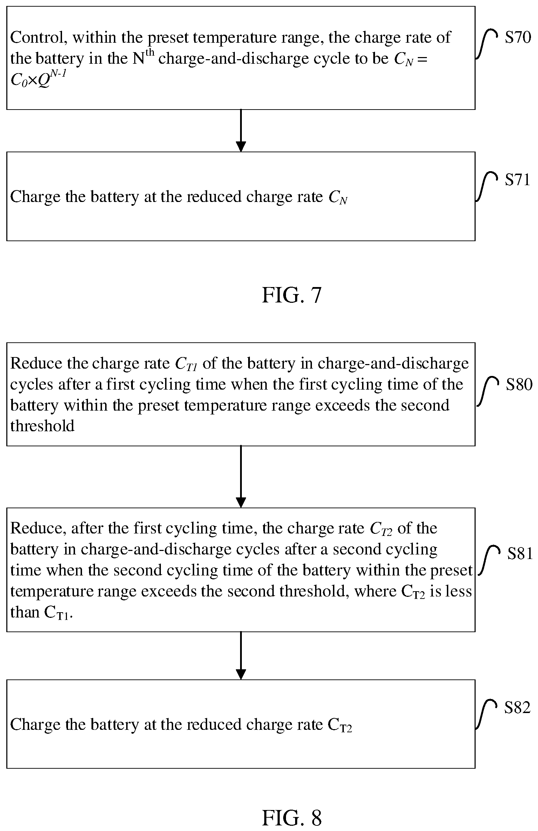

Referring to FIG. 7, FIG. 7 is a flowchart of a battery charging method according to still another embodiment of this application. The battery charging method is applied to the electronic device. The battery charging method includes the following steps:
Step S70: Control, within the preset temperature range, the charge rate of the battery in the N^{th} charge-and-discharge cycle to be *C_{N}* = *C*₀ × *Q^{N-1},* where *C*₀ is a factory-set charge rate of the battery, 0.9 ≤ *Q* ≤ 0.9999, and N is a positive integer.

In this embodiment of this application, the charge rate of the battery may be adjusted after each N charge-and-discharge cycle, and the charge rates of the battery may be set to comply with a geometric progression within the preset temperature range. Within the preset temperature range, the charge rate of the battery in the N^{th} charge-and-discharge cycle is *C_{N} = C*₀ × *Q*^{*N*-1}*. C*₀ is a factory-set charge rate of the battery. 0.9 ≤ *Q* ≤ 0.9999. For example, in a circumstance that a silicon-system battery with a silicon content of 15% is used and the preset temperature range is 5 °C, during charge-and-discharge cycling of the battery, the battery is charged at a 1C rate and discharged at a 4C rate. After 30 charge-and-discharge cycles, the charge rate of the battery in the 31^{st} charge-and-discharge cycle is *C_{N}* = 1C × 0.998³¹⁻¹ *=* 0.9417C.

It is hereby noted that in order to continuously improve the temperature performance of the battery in a low-temperature environment, the charge rate of the battery in the charge-and-discharge cycles after the N^{th} cycle is also *C_{N}.*

Step S71: Charge the battery at the reduced charge rate *C_{N}.*

For the specific implementation of step S71, reference may be made to the implementation of step S41 in FIG. 4, the details of which are not repeated here.

Step S80: Reduce the charge rate *C_{T1}* of the battery in charge-and-discharge cycles after a first cycling time when the first cycling time of the battery within the preset temperature range exceeds the second threshold.

In an embodiment of this application, the charge rate of the battery may be adjusted based on a cycling time of the battery in a low-temperature environment. Specifically, when the cycling time of the battery in a preset temperature range exceeds the second threshold, the charge rate of the battery is reduced based on a preset rule. The second threshold may be a plurality of different time periods. For example, the second threshold may be 10 hours, or 20 hours, or 2 days, or the like.

In some embodiments, the second threshold may be a time period, for example, the second threshold is 10 hours. When the cycling time of the battery in a preset temperature range reaches 10 hours, the charge rate of the battery is reduced based on a preset rule.

In other embodiments, the second threshold may include a plurality of time periods. In the plurality of time periods, each time period is the same; or, in the plurality of time periods, each time period may be different, and the length of each time period may be adjusted according to actual conditions. In some embodiments, each of the plurality of time periods diminishes progressively when the charge-and-discharge cycling proceeds.

In an embodiment of this application, the charge rate of the battery may be reduced within the preset temperature range based on a cycling time of the battery instead. The charge rate *C_{T1}* of the battery in charge-and-discharge cycles after a first cycling time is reduced in response to a condition that the first cycling time of the battery within the preset temperature range exceeds the second threshold.

Step S81: Reduce, after the first cycling time, the charge rate C_{T2} of the battery in charge-and-discharge cycles after a second cycling time in response to a condition that the second cycling time of the battery within the preset temperature range exceeds the second threshold, where C_{T2} is less than C_{T1}.

In an embodiment of this application, after the first cycling time of the battery, the charge rate C_{T2} of the battery in charge-and-discharge cycles after a second cycling time may be further reduced in response to a condition that the second cycling time of the battery within the preset temperature range exceeds the second threshold, where C_{T2} is less than C_{T1}. The second threshold is greater than or equal to 10 hours and less than or equal to 2 days. In some embodiments, the second threshold may be 20 hours.

In an embodiment of this application, after the second cycling time, the charge rate *C_{T3}* of the battery in charge-and-discharge cycles after a third cycling time may be further reduced in response to a condition that the third cycling time of the battery within the preset temperature range exceeds the second threshold, where C_{T3} is less than C_{T2}. This process goes on, after the (L-1)^{th} cycling time, the charge rate C_{TL} of the battery in charge-and-discharge cycles after an L^{th} cycling time may be reduced in response to a condition that the L^{th} cycling time of the battery within the preset temperature range exceeds the second threshold, where C_{TL} < C_{T(L-1)}. C_{T(L-1)} is the charge rate of the battery in charge-and-discharge cycles corresponding to the (L-1)^{th} cycling time.

It is hereby noted that the second threshold corresponding to the (L-1)^{th} cycling time may be the same as or different from the second threshold corresponding to the L^{th} cycling time, and the value of the second threshold may be adjusted according to actual conditions. In an embodiment, when the charge-and-discharge cycling proceeds, the second threshold may be gradually reduced. For example, when the battery is used at a preset temperature 0 °C, the charging device 200 charges the battery at a 0.7C rate. When the first cycling time is 2 days, after the battery is cycled in the 0 °C low-temperature environment for two days, the charging device 200 reduces the charge rate of the battery to 0.65C, and charges the battery at a 0.65C rate; when the second cycling time is 1.5 days, after the battery is cycled in the 0 °C low-temperature environment for 1.5 days, the charging device 200 reduces the charge rate of the battery to 0.6C, and charges the battery at a 0.6C rate.

Step S82: Charge the battery at the reduced charge rate C_{T2}.

For the specific implementation of step S82, reference may be made to the implementation of step S41 in FIG. 4, the details of which are not repeated here.

In some embodiments, a negative electrode material of the battery includes a silicon-based material. A silicon content of the silicon-based material is negatively correlated to a difference between an upper limit and a lower limit of the first threshold. The silicon content of the silicon-based material is negatively correlated to a difference between an upper limit and a lower limit of the second threshold. For batteries with different silicon contents, when the batteries are used for the same number of cycles or the same cycling time in the same low-temperature environment, the amount of lithium plating generated by the batteries increases with the increase of the silicon content. Therefore, for batteries with different silicon contents, during the cycling within a preset temperature range, the charge rates of the batteries are reduced at different speeds or at different intervals of cycles. The higher the silicon content, the faster the charge rate needs to be reduced.

To make the objectives, technical solutions, and advantages of this application clearer, the following describes the battery charging and discharging method according to this application in more detail with reference to drawings and embodiments. Understandably, the specific embodiments described herein are merely intended to explain this application, but not to limit this application.

The battery system used in the comparative embodiments and the embodiments is a silicon system. The parameters of the battery system, compaction density, electrolyte solution, and the like used by the batteries in the specific embodiments and comparative embodiments are shown in Table 1 below. The battery charging method provided in this application improves the cycle life of silicon-system batteries. The lithium-ion secondary batteries in the embodiments and comparative embodiments of this application are a pouch batteries with a rated capacity of 3000 mAh. The specific parameters are shown in Table 1 below.

**Table 1 Parameters of batteries used in comparative embodiments and embodiments of this application**

| Item | | Parameter |
|---|---|---|
| Positive electrode | Active material | Li(Ni₉Co_{0.5}Mn_{0.5})O₂ ternary material |
| | Coating weight (g/cm²) | 0.13 |
| | Compaction density (g/cm³) | 3.45 |
| | Conductive agent | 0.3 wt% carbon nanotubes + 0.4 wt% conductive carbon black |
| | Binder | 2.1 wt% PVDF |
| Negative electrode | Active material | 93 wt% graphite + 7 wt% silicon-oxygen material |
| | Coating weight (g/cm²) | 0.072 |
| | Compaction density (g/cm³) | 1.6 |
| | Conductive agent | 0.2 wt% conductive carbon black |
| | Dispersant | 0.35 wt% CMC |
| | Binder | 2 wt% PAA |
| Separator (a base film surface facing the positive electrode plate is sequentially coated with an inorganic coating and an organic coating, and a base film surface facing the negative electrode plate is coated with an organic coating) | Base film | 5 µm PE base film |
| | Organic coating | 7 µm (PVDF sprayed particles) |
| | Inorganic coating | 2 µm (ceramic particles) |
| Electrolyte solution | Electrolyte injection amount | 6 g |
| | Constituents | Ethylene carbonate (EC), propylene carbonate (PC), diethyl carbonate (DEC), and ethyl methyl carbonate (EMC) are mixed at a mass ratio of 20 : 30 : 40 : 10, with LiPF₆ used as a lithium salt at a concentration of 1.2 mol/L. |

In Embodiments 1 to 3 and comparative embodiment of this application, the battery is designed according to the battery system shown in Table 1 above, and for the battery in the charge-and-discharge cycling at a preset temperature of 5 °C, an initial charge rate is 1C, and the discharge rate is kept at 3C.

In Embodiment 1, the charge-and-discharge cycling is performed at a preset temperature of 5 °C. At intervals of 50 charge-and-discharge cycles, the charge rate for the battery is reduced by 0.1C. The total number of charge-and-discharge cycles performed is 300.

In Embodiment 2, the charge-and-discharge cycling is performed at a preset temperature of 5 °C. The charge rate for the battery in the N^{th} charge-and-discharge cycle is *C_{N}* = 1 - (*N* - 1) × 0.002, where N is the number of charge-and-discharge cycles, N ≤ 401, N is a positive integer, and the total number of charge-and-discharge cycles performed is 300.

In Embodiment 3, the charge-and-discharge cycling is performed at a preset temperature of 5 °C. The charge rate for the battery in the N^{th} charge-and-discharge cycle is *C_{N}* = 1 × 0.998^{*N*-1}*,* where N is the number of charge-and-discharge cycles. The total number of charge-and-discharge cycles performed is 300.

In Comparative Embodiment 1, the charge-and-discharge cycling is performed at a preset temperature of 5 °C. The charge rate for the battery is kept at 1C and the discharge rate is kept at 3C in each N charge-and-discharge cycle. The total number of charge-and-discharge cycles is 300.

The following describes a test process for the battery charging method provided in this application.

Specifically, at a preset temperature of 5 °C, the battery is charged at a preset value of constant current until the voltage reaches 4.3 V, and then charged at a constant voltage of 4.3 V until the current of the battery is less than 0.05C. The battery is left to stand for 15 minutes, and then the battery is discharged at a 3C constant current rate until the voltage drops to 2.5 V, and then the battery is left to stand for 30 minutes. This process is one charge-and-discharge cycle. The above charge-and-discharge process is repeated for 300 cycles, and the discharge capacity at the end of the 3^{rd} charge-and-discharge cycle is recorded as Q₀. The discharge capacity at the end of the subsequent 300^{th} charge-and-discharge cycle is recorded as Q₃₀₀. Therefore, the discharge capacity retention rate at the end of the 300^{th} charge-and-discharge cycle = Q₃₀₀/Q₀ × 100%. A PPG thickness of the battery in each embodiment or comparative embodiment at 30% SOC (or 3.6 V) is T₀, and the PPG thickness of the battery in each subsequent embodiment and comparative embodiment fully charged at the end of the 300^{th} charge-and-discharge cycle is T₃₀₀. Therefore, the expansion rate of the battery after 300 charge-and-discharge cycles = (T₃₀₀ - T₀)/T₀ × 100%. After completion 300 charge-and-discharge cycles, the battery in a fully-charged state is disassembled, and the metal lithium plating at an electrode interface is checked. The discharge capacity retention rate, the expansion rate, and the lithium plating status of the battery are obtained, as shown in Table 2 below.

**Table 2 Discharge capacity retention rate, expansion rate, and lithium plating status of the battery after 300 charge-and-discharge cycles**

| Item | Discharge capacity retention rate of battery after 300 charge-and-discharge cycles (%) | Expansion rate of battery after 300 charge-and-discharge cycles (%) | Lithium plating status of battery after 300 charge-and-discharge cycles |
|---|---|---|---|
| Embodiment 1 | 80 | 13 | Slight lithium plating |
| Embodiment 2 | 82 | 11 | Slight lithium plating |
| Embodiment 3 | 83 | 11 | Slight lithium plating |
| Comparative Embodiment 1 | 62 | 25 | Severe lithium plating |

As can be seen from the electrical performance data during low-temperature cycling, the silicon-containing batteries cycled at the reduced rate in Embodiments 1, 2, and 3 outperform the battery in Comparative Embodiment 1 by significantly improving the cycle life, effectively suppressing the expansion of the silicon-based negative electrode plate, reducing the amount of metal lithium plating, and ensuring the safety of the battery in use.

In the battery charging method provided in an embodiment of this application, during charge-and-discharge cycling of the battery, the number of cycles or the cycling time of the battery in a low-temperature environment is monitored, the charge rate of the battery is reduced based on a preset rule, and the battery is charged at the reduced rate. This can effectively alleviate the risk of lithium plating caused by insufficient kinetics of the silicon-system lithium-ion batteries in the low-temperature environment, and prolong the service life of the battery. In addition, this reduces the safety hazards of thermal runaway of the battery due to subsequent use in a normal- or high-temperature environment, and can effectively prolong the cycle life of the battery and ensure superior performance and safety of the battery.

Still referring to FIG. 2 and FIG. 3, in this embodiment, the memory 130 may be an internal memory of the electronic device 100, that is, a memory built in the electronic device 100. In other embodiments, the memory 130 may be an external memory of the electronic device 100 instead, that is, a memory externally connected to the electronic device 100. The memory 220 may be an internal memory of the charging device 200, that is, a memory built in the charging device 200. In other embodiments, the memory 220 may be an external memory of the charging device 200 instead, that is, a memory externally connected to the charging device 200.

In some embodiments, the memory 130 is configured to store program code and various data, and access the programs or data automatically at a high speed during operation of the electronic device 100. The memory 220 is configured to store program code and various data, and access the programs and data automatically at a high speed during operation of the charging device 200.

The memories 130 and 220 may include a random access memory, and may further include a non-volatile memory, such as a hard disk, an internal memory, a plug-in hard disk, a smart media card (SMC), a secure digital (SD) card, a flash card, at least one disk storage device, a flash memory device, or other volatile solid-state storage devices.

In an embodiment, the processors 140 and 230 may be a central processing unit (CPU), or may be another general-purpose processor, a digital signal processor (DSP), an application-specific integrated circuit (ASIC), a field programmable gate array (FPGA), or another programmable logical device, a discrete gate, or a transistor logical device, a discrete hardware component, or the like. The general-purpose processor may be a microprocessor, or the processor may be any other conventional processor or the like.

The program code and various data in the memories 130 and 220, when implemented in the form of a software functional unit and sold or used as an independent product, may be stored in a computer-readable storage medium. Based on such an understanding, all or part of the processes of the method described in the foregoing embodiments, for example, the steps of the battery charging and discharging method in this application, may also be performed by relevant hardware instructed by a computer program. The computer program may be stored in a computer-readable storage medium. When executed by a processor, the computer program can perform the steps in each method embodiment described above. The computer program includes computer program code. The computer program code may be in the form of source code, object code, an executable file, or some intermediate forms, or the like. The computer-readable medium may include any entity or device capable of carrying the computer program code, record medium, USB disk, mobile hard disk, magnetic disk, optical disk, computer memory, read-only memory (ROM, Read-Only Memory), and the like.

Understandably, the division into the modules is a logical function division, and may be in other division forms in actual implementation. In addition, function modules in each embodiment of this application may be integrated into one processing unit, or each module may exist physically alone, or two or more modules may be integrated into one unit. The integrated module may be implemented in the form of hardware, or may be implemented in the form of hardware plus a software function module.

Finally, it is hereby noted that the foregoing embodiments are merely intended for describing the technical solutions of this application but not intended as a limitation. Although this application is described in detail with reference to preferred embodiments, a person of ordinary skill in the art understands that modifications or equivalent replacements may be made to the technical solutions of this application without departing from the essence and scope of the technical solutions hereof. A person of ordinary skill in the art understands that the foregoing implementations are merely intended for describing this application, but not intended as a limitation on this application. Any and all appropriate modifications and changes made to the embodiments without departing from the essence and scope of this application still fall within the protection scope of this application.

## Claims

1. A charging device (200), **characterized in that** the charging device (200) comprises:
a communication unit (210); and
a processor (230), configured to obtain charge-and-discharge data of a battery (110) through the communication unit (210), wherein the charge-and-discharge data comprises a number of cycles of the battery (110) and/or a cycling time of the battery (110);
the processor (230) is configured to perform the following operations:
reducing a charge rate of the battery (110) in response to a condition that the number of cycles of the battery (110) exceeds a first threshold within a preset temperature range and/or in response to a condition that the cycling time of the battery (110) exceeds a second threshold within a preset temperature range;
wherein the preset temperature range is less than or equal to 10 °C.

2. The charging device (200) according to claim 1, **characterized in that** the reducing a charge rate of the battery (110) comprises:
reducing a charge rate *C_{N}* of the battery (110) in an N^{th} charge-and-discharge cycle based on a charge rate in an (N-1)^{th} charge-and-discharge cycle in response to a condition that a difference in the number of cycles between an M^{th} charge-and-discharge cycle and the N^{th} charge-and-discharge cycle of the battery (110) within the preset temperature range exceeds the first threshold, wherein M is less than N, both M and N are positive integers, and N ≥ 2.

3. The charging device (200) according to claim 2, **characterized in that** the processor (230) is further configured to perform the following operations:
controlling the charge rate of the battery (110) in the N^{th} charge-and-discharge cycle to be *C_{N} = C*₀ *+* (*N -* 1) × *d* or *C_{N}* = *C*₀ × *Q*^{*N*-1} within the preset temperature range, wherein *C*₀ is a factory-set charge rate of the battery (110), -0.002*C* ≤ *d* ≤ -0.0001*C,* 0.9 ≤ *Q* ≤ 0.9999, and N is a positive integer greater than or equal to 1.

4. A battery (110) charging method, **characterized in that** the charging method comprises:
reducing a charge rate of a battery (110) based on a preset rule when charge-and-discharge data of the battery (110) within a preset temperature range meets a preset condition, wherein the preset temperature range is less than or equal to 10 °C, and the charge-and-discharge data comprises a number of cycles of the battery (110) and/or a cycling time of the battery (110); and
charging the battery (110) at the reduced charge rate.

5. The charging method according to claim 4, **characterized in that** the preset condition comprises:
at least one of: a difference in the number of cycles between an M^{th} charge-and-discharge cycle and an N^{th} charge-and-discharge cycle of the battery (110) within the preset temperature range exceeds a first threshold; or, the cycling time of the battery (110) within the preset temperature range exceeds a second threshold, wherein the first threshold is greater than or equal to 10 and less than or equal to 100.

6. The charging method according to claim 5, **characterized in that** the reducing a charge rate of a battery (110) based on a preset rule comprises:
reducing a charge rate *C_{N}* of the battery (110) in the N^{th} charge-and-discharge cycle based on a charge rate in an (N-1)^{th} charge-and-discharge cycle when the difference in the number of cycles between the M^{th} charge-and-discharge cycle and the N^{th} charge-and-discharge cycle of the battery (110) within the preset temperature range exceeds the first threshold, wherein M is less than N, both M and N are positive integers, and N ≥ 2.

7. The charging method according to claim 6, **characterized in that** the reducing a charge rate of a battery (110) based on a preset rule further comprises:
controlling the charge rate of the battery (110) in the N^{th} charge-and-discharge cycle to be *C_{N} = C*₀ *+ (N -* 1) × *d or C_{N}* = *C*₀ × *Q^{N-1}* within the preset temperature range, wherein *C*₀ is a factory-set charge rate of the battery (110), -0.002*C* ≤ *d* ≤ -0.0001*C,* 0.9 ≤ *Q* ≤ 0.9999, and N is a positive integer greater than or equal to 1.

8. The charging method according to claim 7, **characterized in that** the charge rate in charge-and-discharge cycles after the N^{th} cycle is *C_{N}.*

9. The charging method according to any one of claims 5 to 8, **characterized in that** the reducing a charge rate of a battery (110) based on a preset rule further comprises:
reducing a charge rate *C_{K}* of the battery (110) in a K^{th} charge-and-discharge cycle based on a charge rate in a (K-1)^{th} charge-and-discharge cycle in response to a condition that a difference in the number of cycles between the N^{th} charge-and-discharge cycle and the K^{th} charge-and-discharge cycle of the battery (110) within the preset temperature range exceeds the first threshold, wherein *C_{K} = C_{N} +* (*K - N -* 1) × *d* or *C_{K} = C_{N}* × *Q*^{*K-N-*1}*, C*₀ is a factory-set charge rate of the battery (110), -0.002*C* ≤ *d* ≤ -0.0001*C,* 0.9 ≤ *Q* ≤ 0.9999, K is a positive integer, and K-N ≥ 1.

10. The charging method according to claim 9, **characterized in that** the charge rate of the battery (110) in charge-and-discharge cycles after the K^{th} cycle is *C_{K}.*

11. The charging method according to any one of claims 4 to 10, **characterized in that** a value of the preset temperature is positively correlated to the first threshold.

12. The charging method according to claim 11, **characterized in that** the reducing a charge rate of a battery (110) based on a preset rule further comprises:
reducing a charge rate C_{T1} of the battery (110) in charge-and-discharge cycles after a first cycling time in response to a condition that the first cycling time of the battery (110) within the preset temperature range exceeds the second threshold.

13. The charging method according to claim 12, **characterized in that** the reducing a charge rate of a battery (110) based on a preset rule further comprises: reducing, after the first cycling time, a charge rate C_{T2} of the battery (110) in charge-and-discharge cycles after a second cycling time in response to a condition that the second cycling time of the battery (110) within the preset temperature range exceeds the second threshold, wherein C_{T2} is less than C₁₁.

14. The charging method according to any one of claims 4 to 13, **characterized in that** the second threshold is greater than or equal to 10 hours and less than or equal to 2 days.

15. An electronic device (100), **characterized in that** the electronic device (100) comprises:
a battery (110), wherein a silicon content in the battery (110) is greater than or equal to 1 wt% and less than or equal to 100 wt%; and
a processor (140), configured to charge the battery (110) by performing the charging method according to any one of claims 4 to 14.
